# EUROPÄISCHE PATENTANMELDUNG

(11) **EP 3 513 949 A1**
(43) Veröffentlichungstag der Anmeldung: **24.07.2019**
(21) Anmeldenummer: 18152269.9
(22) Anmeldetag: 18.01.2018
(51) Int. Cl.: B29C 64/227, B29C 64/209, B33Y 30/00, B33Y 99/00, B22F 3/105, E01C 23/00

(54) **MOBILE ADDITIVE FERTIGUNGSEINRICHTUNG MIT AUSGLEICHSGEWICHTEN**

(71) Anmelder: Siemens Aktiengesellschaft, 80333 München (DE)
(72) Erfinder: Jähnicke, Jens, 09112 Chemnitz (DE); Münz, Ulrich, Plainsboro, NJ 08536 (US)

(57) **Zusammenfassung**

Vorgeschlagen wird eine mobile Einrichtung (1) zur additiven Fertigung mit einem Fertigungssystem (4), das dazu ausgebildet und vorgesehen ist, ein Material oder eine Kombination von verschiedenen Materialien an einer vorherbestimmten und mittels eines digitalen Modells vorgebbaren Stelle abzulagern, wobei das Fertigungssystem (4) wenigstens einen Druckkopf (9) zur Materialausscheidung umfasst. Die mobile Einrichtung (1) ist dadurch gekennzeichnet, dass das Fertigungssystem (4) wenigstens ein Gegengewicht (10) aufweist, das dazu ausgebildet und vorgesehen ist, bei einer Bewegung des Druckkopfs (9) während eines Fertigungsvorgangs auftretende Beschleunigungskräfte mittels einer entsprechenden Gegenbewegung zu kompensieren. Dadurch wird eine besonders effiziente und hochpräzise mobile additive Fertigung ermöglicht.

## Beschreibung

Die Erfindung betrifft eine mobile Einrichtung zur additiven Fertigung mit einem Fertigungssystem nach Anspruch 1, ein additives Fertigungsverfahren mittels einer mobilen Fertigungseinrichtung nach Anspruch 4 und eine Verwendung der mobilen Einrichtung nach Anspruch 5.

In einem Bereich der additiven Fertigung existiert eine Vielzahl unterschiedlicher Fertigungsverfahren. Speziell das Fused Layer Manufacturing (kurz: FLM, auch als FDM® bekannt) erlaubt dabei theoretisch eine Herstellung beliebig großer Teile in einem Stück.

Da Fertigungsmaschinen jedoch nur über einen endlichen Arbeitsraum verfügen und mit der Größe des Arbeitsraumes die Kosten der Fertigungsmaschine stark ansteigen, zielen derzeitige Entwicklungen darauf ab, anstelle von fest angeordneten Fertigungsmaschinen mobile Fertigungseinrichtungen zu benutzen.

Mobile Fertigungseinrichtungen kennzeichnen sich dadurch, dass sie nicht fest mit dem Untergrund verbunden sind, weshalb sie ihre Arbeitsposition mit dem Weiterwachsen eines herzustellenden Teils verlegen können. Einsatz finden mobile Fertigungseinrichtungen aktuell nur in Anwendungen des Straßenbaus.

Bei einer additiven Fertigung mit dem oben genannten Verfahren ist es typisch, dass in jedem beliebigen (ausreichend großen) Ausschnitt des zu fertigenden Teils mehrere Materialbahnen abgelegt werden müssen. Dabei ist es bekannt, die mobile Fertigungsmaschine derart zu gestalten, dass die Düse innerhalb der mobilen Fertigungseinrichtungen beweglich ist, ohne die Fertigungseinrichtungen selbst bewegen zu müssen. Dabei kann die Düse einen bestimmten Ausschnitt überstreichen, in dem sie sehr schnell arbeiten kann, während die komplette mobile Fertigungseinrichtungen mit der langsameren Geschwindigkeit den Ausschnitt über das gesamte zu fertigende Teil bewegt. Vorteilhaft dabei ist, dass die durch den fehlenden Verbund der mobilen Fertigungseinrichtungen begrenzten Beschleunigungskräfte der Fertigungseinrichtungen und damit einhergehende geringe Fertigungsgeschwindigkeiten weitestgehend kompensiert werden können.

In der WO 2014/209815 A1 ist eine mobile Fertigungseinrichtung für den Straßenbau offenbart. Dabei bewegt sich die mobile Fertigungseinrichtung mit vergleichbar geringer Geschwindigkeit im Straßenraum, während der eigentliche Druckkopf des FLM-Verfahrens sich im Inneren der mobilen Fertigungseinrichtungen unabhängig von der Geschwindigkeit der kompletten Fertigungseinrichtung mit deutlich höherer Geschwindigkeit bewegt.

Aufgrund der vergleichbar großen Masse der für den Straßenbau vorgesehenen Fertigungseinrichtung können die durch die hohe Geschwindigkeit des Druckkopfs entstehenden Kräfte ohne jegliche Gegenmaßnahmen kompensiert werden. Je kleiner die eigentliche Fertigungseinrichtung jedoch massemäßig ist, desto mehr fallen aus der schnellen Bewegung des Druckkopfs resultierende Beschleunigungskräfte ins Gewicht.

Der Erfindung liegt die Aufgabe zugrunde, eine mobile Fertigungseinrichtung anzugeben, die auch bei einer verhältnismäßig geringen Eigenmasse eine hohe Fertigungsgeschwindigkeit erlaubt, ohne dass dabei Einbußen bei der Fertigungsqualität in Kauf genommen werden müssen.

Diese Aufgabe wird gelöst durch eine mobile Einrichtung zu additiven Fertigung mit einem Fertigungssystem nach Anspruch 1, durch ein additives Fertigungsverfahren mittels einer mobilen Fertigungseinrichtung nach Anspruch 4 und durch eine Verwendung der mobilen Einrichtung nach Anspruch 5. Vorteilhafte Weiterbildungen ergeben sich aus den abhängigen Ansprüchen.

Eine mobile Einrichtung der eingangs beschriebenen Art ist dazu ausgebildet und vorgesehen, ein Material oder eine Kombination von verschiedenen Materialien an einer vorherbestimmten und mittels eines digitalen Modells vorgebbaren Stelle abzulagern. Dabei umfasst das Fertigungssystem wenigstens einen Druckkopf zur Materialausscheidung. Die erfindungsgemäße mobile Einrichtung ist dadurch gekennzeichnet, dass das Fertigungssystem wenigstens ein Gegengewicht aufweist, das dazu ausgebildet und vorgesehen ist, bei einer Bewegung des Druckkopfes während eines Fertigungsvorgangs auftretende Beschleunigungskräfte mittels einer entsprechenden Gegenbewegung zu kompensieren.

Erfindungsgemäß ist demnach vorgesehen, wenigstens ein entsprechendes Gegengewicht zum Druckkopf des additiven Fertigungssystems in einer Weise zu bewegen, dass eine Summe der resultierenden Beschleunigungskräfte von Druckkopf und Gegengewicht bezogen auf die mobile Einrichtung Null wird. Mit anderen Worten wird das Gegengewicht in einer Gegenbewegung zur eigentlichen Bewegung des Druckkopfes während eines Betriebs der mobilen Einrichtung zur additiven Fertigung verfahren, um die aus der Bewegung des Druckkopfs resultierenden Beschleunigungskräfte zu kompensieren.

Wie eingangs beschrieben, wird der Druckkopf eines additiven Fertigungssystems in der Regel mit verhältnismäßig hohen Geschwindigkeiten bewegt, um eine möglichst geringe Fertigungsdauer zu ermöglichen. Speziell bei kleineren mobilen Fertigungssystemen ist eine Masse der Fertigungseinrichtung verhältnismäßig klein, sodass die aus der schnellen Bewegung des Druckkopfs resultierenden Beschleunigungskräfte relativ zur Masse der Fertigungseinrichtung im Gesamten groß sind. Die erfindungsgemäße Vorsehung eines Gegengewichts kann dabei verhindern, dass die zuvor erwähnten Beschleunigungskräfte eine Stabilität des gesamten Fertigungssystems bzw. der gesamten mobilen Einrichtung negativ beeinflussen, was zu einer Verringerung der Qualität der mobilen additiven Fertigung führen kann.

Das Vorsehen des wenigstens einen Gegengewichts ist dabei nur mit minimalem Materialmehraufwand verbunden. Die Ansteuerung des Gegengewichts kann dabei vorteilhafterweise von einer Steuerkomponente des Fertigungssystemen übernommen werden, sodass auch hier lediglich ein zu vernachlässigender Mehraufwand entsteht.

Bevorzugt stellt das wenigstens eine Gegengewicht selbst einen weiteren Druckkopf dar. Die beiden Druckköpfe werden dabei von einer Steuerkomponente so bewegt, dass sich deren Beschleunigungskräfte gegenseitig aufheben. Diese Ausgestaltung der Erfindung bringt den Vorteil mit sich, dass kein separates Gegengewicht bzw. separate Gegengewichte vorgesehen werden müssen, um die auftretenden Beschleunigungskräfte zu kompensieren.

Bei einer besonders vorteilhaften Weiterbildung der erfindungsgemäßen mobilen Einrichtung zur additiven Fertigung entspricht eine Masse des wenigstens einen Gegengewichts im Wesentlichen einer Masse des Druckkopfes. Ein derart ausgebildetes Gegengewicht kann besonders einfach zu einer präzisen Kompensation der auftretenden Beschleunigungskräfte des verwendet werden.

Vorteilhafterweise umfasst die mobile Einrichtung eine Antriebseinheit und eine Steuereinheit, mittels derer sich die mobile Einrichtung autonom fortbewegen kann. Autonom bedeutet in diesem Zusammenhang, dass die mobile Einrichtung zu einer additiven Fertigung keines Bedienpersonals bedarf, sondern selbstständig mittels der Antriebseinheit bzw. der Steuereinheit ihre Position verändern kann. Dadurch kann die mobile Einrichtung zur additiven Fertigung besonders effizient und ressourcensparend fertigen.

Die zuvor genannte Aufgabe wird zudem durch ein additives Fertigungsverfahren mittels einer mobilen Fertigungseinrichtung gelöst. Dabei umfasst die mobile Einrichtung ein Fertigungssystem, das dazu ausgebildet und vorgesehen ist, ein Material oder eine Kombination von verschiedenen Materialien an einer vorherbestimmten und mittels eines digitalen Modells vorgebbaren Stelle abzulagern, wobei das Fertigungssystem wenigstens einen Druckkopf zur Materialausscheidung umfasst.

Dabei weist das Fertigungssystem wenigstens ein Gegengewicht auf, das dazu ausgebildet und vorgesehen ist, bei einer Bewegung des Druckkopfs während eines Fertigungsvorgangs auftretende Beschleunigungskräfte mittels einer entsprechenden Gegenbewegung zu kompensieren. Das erfindungsgemäße Verfahren ist dadurch gekennzeichnet, dass bei einer Bewegung des Druckkopfs während eines Fertigungsvorgangs auftretende Beschleunigungskräfte durch eine entsprechend entgegengesetzte Bewegung des Gegengewichts kompensiert werden.

Durch die aktive Kompensation der bei den verhältnismäßig schnellen Bewegungen des Druckkopfs auftretenden Beschleunigungskräfte kann der fehlende Verbund der mobilen additiven Fertigungseinrichtung mit dem Boden dahingehend ausgeglichen werden, dass die mobile Fertigungseinrichtung die für eine effiziente und schnelle Produktionen erforderlichen Bewegungsgeschwindigkeiten des Druckkopfs realisieren kann.

Bevorzugt wird die erfindungsgemäße mobile Fertigungseinrichtung zur additiven Fertigung von Komponenten eingesetzt, die für eine Verwendung in einem industriellen Kontext vorgesehen und ausgebildet sind. Unter dem Begriff Komponenten werden in diesem Zusammenhang alle Bauteile, Vorrichtungen, Werkzeuge und dergleichen verstanden, die üblicherweise in industriellen Anlagen zum Einsatz kommen. Es ist aber auch möglich, die erfindungsgemäße mobile Fertigungseinrichtung zur additiven Fertigung von weiteren Komponenten einzusetzen, die auch außerhalb eines industriellen Kontextes verwendet werden können.

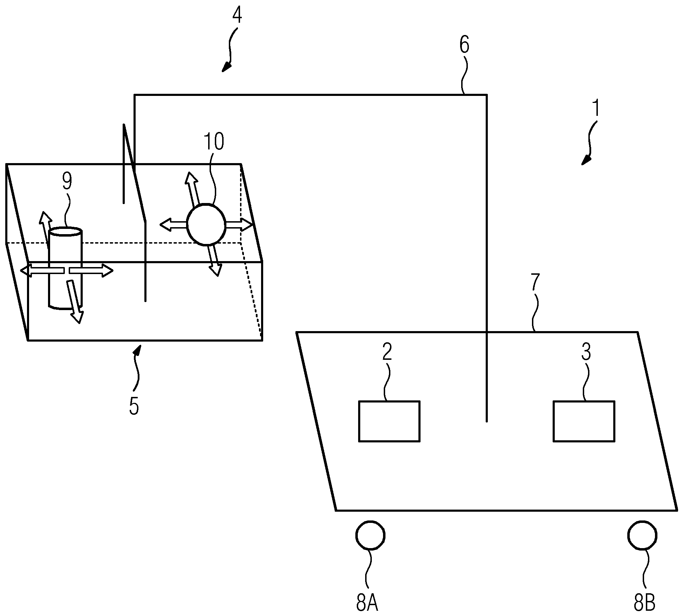

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird. Die Zeichnung stellt dabei eine Prinzipskizze einer erfindungsgemäßen mobilen Einrichtung 1 zur additiven Fertigung dar.

In der Zeichnung ist eine erfindungsgemäße mobile Einrichtung 1 zur additiven Fertigung von beliebigen Komponenten dargestellt. Die mobile Einrichtung 1 umfasst eine Antriebseinheit 2, eine Steuereinheit 3 und ein Fertigungssystem 4. Das Fertigungssystem 4 umfasst einen Fertigungskopf 5, der mittels eines Maschinenarms 6 mit einer Basiseinheit 7 der mobilen Einrichtung 1 verbunden ist. Die Antriebseinheit 2 ist in nicht näher dargestellter Weise mit Fortbewegungsmitteln 8A, 8B verbunden und ist wie die Steuereinheit 3 Teil der Basiseinheit 7.

Mittels der Antriebseinheit 2, der Steuereinheit 3 und der Basiseinheit 7 ist die in der Zeichnung dargestellte erfindungsgemäße mobile Einrichtung 1 zu einer autonomen Fortbewegung ausgebildet.

Der Fertigungskopf 5 umfasst einen Druckkopf 9 zur Abgabe eines oder mehrerer Materialien und ein Gegengewicht 10. Das Gegengewicht 10 weist eine Masse auf, die im Wesentlichen einer Masse des Druckkopfs 9 entspricht. Bei einer Bewegung des Druckkopfs 9 wird das Gegengewicht 10 in einer entgegengesetzten Bewegungsrichtung Verfahren, um die aus der Bewegung des Druckkopfs 9 resultierenden Beschleunigungskräfte zu kompensieren. Die insgesamt auf den Maschinenarm 6 resultierende Kraft ist daher nahezu Null.

Die Erfindung ist nicht auf die Verwendung eines einzigen Druckkopfs 9 beschränkt. Vielmehr kann eine nahezu beliebige Anzahl von Druckknöpfen 9 eingesetzt werden, deren erzeugte Beschleunigungskräfte mittels entsprechender Gegengewichte 10 kompensiert werden.

Obwohl die Erfindung im Detail durch das bevorzugte Ausfühungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Mobile Einrichtung (1) zur additiven Fertigung mit einem Fertigungssystem (4), das dazu ausgebildet und vorgesehen ist, ein Material oder eine Kombination von verschiedenen Materialien an einer vorherbestimmten und mittels eines digitalen Modells vorgebbaren Stelle abzulagern, wobei das Fertigungssystem (4) wenigstens einen Druckkopf (9) zur Materialausscheidung umfasst,
**dadurch gekennzeichnet, dass**
das Fertigungssystem (4) wenigstens ein Gegengewicht (10) aufweist, das dazu ausgebildet und vorgesehen ist, bei einer Bewegung des Druckkopfs (9) während eines Fertigungsvorgangs auftretende Beschleunigungskräfte mittels einer entsprechenden Gegenbewegung zu kompensieren.

2. Mobile Einrichtung (1) nach Anspruch 1, bei der eine Masse des wenigstens einen Gegengewichts (10) im Wesentlichen einer Masse des Druckkopfs (9) entspricht.

3. Mobile Einrichtung (1) nach Anspruch 1 oder 2, die eine Antriebseinheit (2) und eine Steuereinheit (3) umfasst, mittels derer sich die mobile Einrichtung (1) autonom fortbewegen kann.

4. Additives Fertigungsverfahren mittels einer mobilen Fertigungseinrichtung (1) nach einem der Ansprüche 1 bis 3,
**dadurch gekennzeichnet, dass**
die bei einer Bewegung des Druckkopfs (9) während eines Fertigungsvorgangs auftretende Beschleunigungskräfte durch eine entsprechend entgegengesetzte Bewegung wenigstens eines Gegengewichts (10) kompensiert werden.

5. Verwendung einer mobilen Einrichtung (1) nach einem der Ansprüche 1 bis 3 zur additiven Fertigung von Komponenten, die für eine Verwendung in einem industriellen Kontext vorgesehen und ausgebildet sind.
